# EUROPEAN PATENT SPECIFICATION

(11) **EP 3 462 067 B1**
(45) Date of publication and mention of the grant of the patent: **02.12.2020**
(21) Application number: 18199793.3
(22) Date of filing: 27.08.2014
(51) Int. Cl.: F16K 31/145, F24D 19/10, G05D 16/06, G05D 16/00

(54) **DIFFERENTIAL PRESSURE VALVE**
DIFFERENZDRUCKVENTIL
SOUPAPE DE PRESSION DIFFÉRENTIELLE

(30) Priority: 11.09.2013 DK PA201300517
(43) Date of publication of application: 03.04.2019
(62) Divisional of application: 14182434.2
(73) Proprietor: Danfoss A/S, 6430 Nordborg (DK)
(72) Inventor: PAPEZ, PRIMOZ, 6430 Nordborg (DK); GUSTINCIC, MATJAZ, 6430 Nordborg (DK)
(74) Representative: Petersen, Frank

(56) References cited:
- EP-A1- 0 076 767
- DE-A1- 4 030 142
- DE-C1- 4 131 709
- US-A1- 2012 085 445

## Description

The present invention relates to a valve comprising a valve part comprising; - a valve housing with a flow communication from a fluid inlet to a flow outlet and a valve seat positioned within said flow communication, a valve cone (3) adapted to change position to change the valve opening defined as the opening between the valve seat and valve cone, a membrane adapted to deflect under the influence of a differential pressure across said membrane and means to communicate pressures to the opposing sides of the membrane,
- a regulation part comprising a biasing member and setting housing, said regulation part attached to said valve part.
- a spindle having a part within the regulation part and a part within the valve part and connected to said valve cone,
where the spindle may be translocated to and maintained at a flushing position the valve cone forms no or at least limited obstruction to the fluid communication from fluid inlet to fluid outlet.

### BACKGROUND

It is well known to introduce pressure balancing valves into flow systems with variable flows pressure fluctuations, such as within the field of district heating or heating of domestic housings in general. A typical pressure balancing valve comprises a membrane deflecting according to a pressure difference over it and by this deflection regulates the orifice through a valve seat by changing the position of a valve cone relative to a valve seat.

One prior document, DE4131709, disclose a valve that responds to a pressure gradient and comprises a housing complete with a seat and valve rod seal plus a diaphragm housing which is fitted to the main housing and divided by the rod-acting diaphragm into two pressure spaces. Springs act on the diaphragm and on the adjuster as fitted to the diaphragm housing. An insert fixed in the centre of the diaphragm is contacted by the valve rod under the load of the valve spring. It is connected via joint to a pin which in turn reaches into the adjuster and is there loaded by the ideal valve spring.

The object of the present invention is to introduce a pressure balancing valve as they are well known, but where it further introduces a shut off function and a flushing function that can be needed for example during assembly of the system, or at least of the valve into the flow system.

The object of the present invention is further to introduce a balancing valve as they are well known, but where a part of the valve may be made of cheaper materials that may not be sustainable to the fluids in the system.

### SUMMARY OF THE INVENTION

The invention is defined by claims 1-9.

A first aspect of the present invention is solved according to the claims. This includes the introduction of a valve comprising a valve part comprising;
- a valve housing with a flow communication from a fluid inlet to a flow outlet and a valve seat positioned within said flow communication, a valve cone adapted to change position to change the valve opening defined as the opening between the valve seat and valve cone, a membrane adapted to deflect under the influence of a differential pressure across said membrane and means to communicate pressures to the opposing sides of the membrane,
- a regulation part comprising a biasing member and setting housing, said regulation part attached to said valve part,
- a spindle having a part within the regulation part and a part within the valve part and connected to said valve cone,
characterized in that
the spindle may be translocated to and maintained at an flushing position the valve cone forms no or at least limited obstruction to the fluid communication from fluid inlet to fluid outlet.

By ensuring the spindle is maintained at the flushing position is obtained that pressure differences across the membrane will not affect the valve cone as its position has been locked by the maintained, or locked, position of the spindle. A second aspect of the resent invention introduces a similar pressure balancing valve, but where a part of the valve is sealed from the fluids thus making it possible to form this part of cheaper materials that may not be sustainable to the fluids in the system.

The present invention further introduces a valve where the pressure setting may be changed, thus changing the pressure of the fluid flowing from its inlet to the outlet that valve maintains at a constant level, where this is done by translocate the spindle within the valve cone. In one preferred embodiment this is done by the valve cone comprising an internal winded bore matching windings at the end of the spindle such that a rotation of the spindle changes its position within the valve cone, this changing the tension of the biasing member.

To facilitate the changing of the setting the regulation part comprises a setting partly positioned within setting housing and where the setting housing and setting are interconnected thus that the setting may be translocated within the setting housing thus translocating the spindle within the valve cone. Both setting housing and setting are hollow bodies such as cylinder shaped. To facilitate the translocation of setting relative to setting housing they in a preferred embodiment are interconnected by windings.

To ensure that no undesired change of setting occurs when the valve is in operation, a blocking mechanism is positioned to prevent rotation of the setting relative to setting housing when in a locking position and enabling rotation when in an unlocking position, where the shift from a locking position to a unlocking position, and vice versa, may be a rotation of the blocking mechanism by some degrees of angle around the setting housing and / or setting, where the locking may be in any manner as will be easily performed by the person skilled in the art.

To ensure the biasing of the biasing member, preferably a spring, a spring guide is connected to the setting and defines the uppermost position of the biasing member in the same manner as it has a bottom position defining its lowermost position, the distance between these thus defining the tension of the biasing member and thus giving to the membrane where the spring guide is connected to a setting snap in a manner where they are inhibited from relative rotation and where the spring guide is prevented from rotation within the setting and where the spindle is prevented from rotation relative to the spring guide.

In one embodiment the setting is done by rotating a knob connected to the spring guide and / or setting in a manner where a rotation of the knob induces a rotation of setting and spring guide and thus the spindle being fixed to the spring guide and thus induces a translocation of the spindle within valve cone.

According to a further aspect of the present invention, the valve further comprises a shut off function where the valve cone is maintained in contact with the valve sea to shut off any fluid communication from the inlet to the outlet. Again but maintaining the spindle, or locking the spindle, at this shutting off position the valve cone will be unaffected by changing pressure differences over the membrane, this thus being prevented from deflection.

To facilitate the shut off function knob is equipped with internal windings adapted to match external windings at the setting where the windings for shut off function is connected by pushing down knob where at least one limiter bump is be formed at the setting and/or knob (2) such that a certain force is needed to push the knob over the limiter bump(s) to the shut off mode. By the limiter bump(s) the knob only get in contact with the windings for flushing function when pushed down, and may similar be disconnected from the windings by being dragged back over the bump(s) again.

The flushing function of the present valve is operated by translocating the spindle to an upper position without changing its position within the valve cone, where in one embodiment of the present invention to facilitate the flushing function a flushing accessory is attached to the valve for the flushing function, said flushing accessory comprising an inner part adapted to fit within the outer part and the two parts being interconnected by windings, where the inner part further comprises means to connect to a section of the spring guide in a manner where the two in inhibited in relative rotation to each other such as by their shape, such as the section having two flat opposing sides and the inner part having an centre opening matching this shape if the section, such that when the inner parts is translocated upwards it drags the setting snap and thus the spindle upwards too, thus removing the valve cone from valve seat forming free access through the valve from inlet to outlet.

Preferred embodiments of the invention will now be described in more detail with reference to the drawing, where in:

### FIGURES

- Fig. 1: is a schematic cross sectional view showing a valve according to the present invention.
- Fig. 2: is a schematic cross sectional view showing an embodiment to change setting of the valve according to the present invention.
- Fig. 3: is a schematic cross sectional view showing an embodiment to shut off a valve according to the present invention.
- Fig. 4A and 4B: is a schematic cross sectional view showing an embodiment to facilitate flushing function of the valve according to the present invention.
- Fig. 5A and 5B: is an embodiment of an introduced flushing function by turning around a knob.

### DETAILED DESCRIPTION OF THE INVENTION

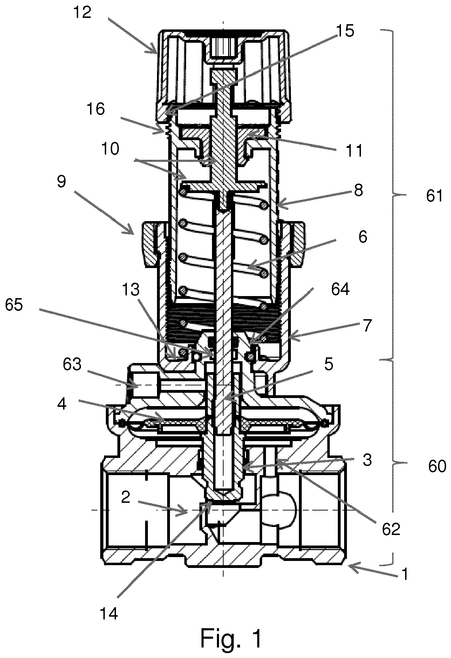

Fig. 1 shows a schematic cross section illustration of an embodiment of the valve of the present invention. The valve comprises a valve housing (1) forming a flow passage between an inlet and outlet. Within the flow passage is positioned a valve seat (2) cooperating with a valve cone (3) in a manner where the flow passage through the flow passage may be fully or partly blocked.

The valve cone (3) interacts with a membrane (4) such that a differential pressure across the membrane will defied it. The valve cone (3) is attached to spindle (5) being biased by spring (6) portioned within setting housing (7) and setting (8). The valve cone (3) comprises an internal winded bore matching windings at the end of the spindle (5) such that a rotation of the spindle (5) changes its position within the valve cone (3). Setting (8) is partly positioned within setting housing (7) and the two parts are interconnected by windings thus that the setting (8) by screwing may be positioned a selectable depths within the setting housing (7). A blocking mechanism (9) is positioned to prevent rotation of the setting (8) relative to setting housing (7) in a locking position and enabling it in an unlocking position. A locking mechanism may be introduced preventing movement of the blocking mechanism (9) in changing from locking position to unlocking position. A spring guide (10) is connected to the setting (8) and defines the uppermost position of the spring (6) in the same manner as it has a bottom position (13) in the illustrated embodiment also being the bottom part of the setting housing (7) defining its lowermost position, the distance between these thus defining the tension of the spring and thus giving its biasing to spindle (5) translating the biasing to the membrane (4) through the valve cone (3).

The spring guide (10) is connected to the setting snap (11) in a manner where they are inhibited from relative rotation such as by shape, e.g. a section of the spindle (5) is hexagonally shaped and fits within an equally formed opening of the setting snap (11). The spring guide (10) is prevented from rotation within the setting (8) and the spindle is prevented from rotation relative to the spring guide (10) and thus the setting (8) too.

A knob (12) is attached to the setting (8) and its functions will be described in detail later.

The valve according to the present invention comprises a scale setting markers at the setting (8) (not illustrated at the figure) visualizing the actual setting of the system, being the tension of the spring (6) that again is directly linked with the pressure setting, where the visualization may be related to how deep the setting (8) is positioned within the setting housing (7) and which markers thereby is hidden by the setting housing (7).

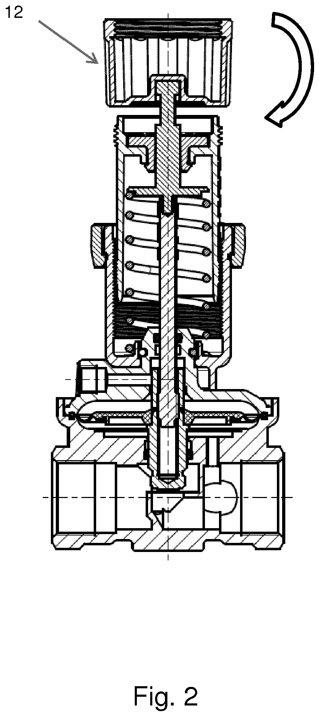

In the illustrated embodiment of Fig. 2 the setting is done by removing the knob (12) and turning it around. At the top it is equipped with a deepening shaped to match the end of the setting snap spring guide (10) in a manner that when connected they are prevented from relative rotation to each other by shape, again e.g. by hexagonal shapes. Since the spring guide (10) and spindle (8) is prevented from rotation within the setting (8), when rotating this turned around knob (12) the whole setting (8) will be rotated and through the winded connection to the setting housing (7) the position of the setting (8) within the setting housing (7) is changed thus changing the distance from the spring guide (10) to the bottom of the setting housing (7) and thus also the tension of the spring (6) and the pressure setting of the valve thereby has been changed where this is visualized by the scale markers at the setting (8). Since the valve cone (3) and spindle (5) are interconnected by windings and the valve cone (3) is prevented from rotation within the valve housing (2), the rotation of the spindle (5) leads to a change of its position within the valve cone (3) thereby changing the height from the end of the valve cone (14) to the spring guide (10), the end of the valve cone (14) usually being the part of it adapted to contact the valve seat (2) when the valve are shut off, see also below.

The knob (12) then may be turned again and positioned as in Fig. 1.

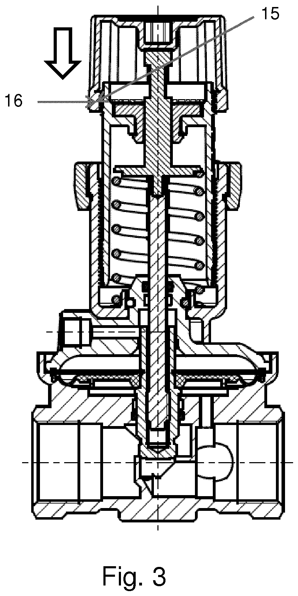

In one embodiment, see also Fig. 3, to shut off the valve the knob (12) is equipped with internal windings (15) adapted to match external windings (16) at the setting (8), but where these windings during operational mode of the valve are not connected. To connect the windings (15, 16) the knob (12) is pushed down to mate them where one or more limiter bumps may be formed at the setting (8) and/or knob (2) such that a certain force is needed to push the knob (12) over the limiter bump(s) to the shut off mode.

When the windings (15, 16) are connected and then by a rotation of the knop (12) winds it downwards at the spindle (8) that remains stationary, thus forming a downwards translation of the spindle (6) and valve cone (3) forcing down until the valve cone (3) till it engages the valve seat (2) to fully close for all fluid access through the valve.

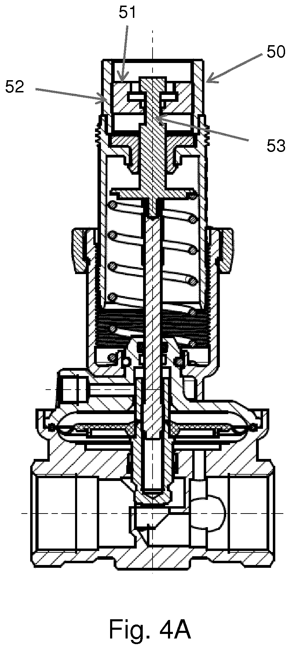

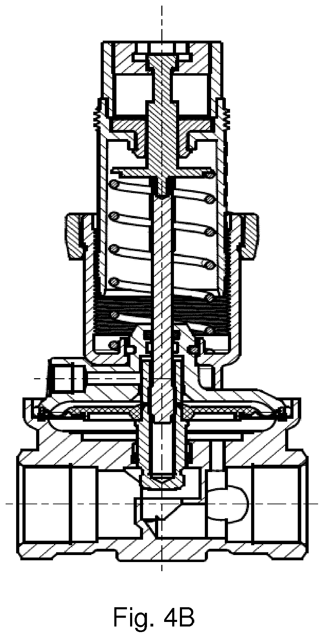

The valve according to the present invention further includes a flushing function as illustrated in one embodiment in Figs. 4A and 4B where the valve is forced in the open position. This is especially relevant during filling or flushing of the system where to the valve is attached, such as pipes, radiators etc.

In the illustrated embodiment of Fig. 4A a flushing accessory (50) is needed being attached to the valve after the knob (12) has been removed. It comprises an inner part (51) adapted to fit within the outer part (52) and the two parts being interconnected by windings. The inner part (51) further comprises means to connect to a section (53) of the spring guide (10) in a manner where the two in inhibited in relative rotation to each other such as by their shape, such as the section (53) having two flat opposing sides and the inner part (51) having an centre opening matching this shape if the section (53). This centre opening may in one non-limiting embodiment be part of a keyhole shaped opening asymmetrically positioned at the inner part (51) thus that an larger opening part is positioned off-centre for positioning the top section (54) through it during of assembly of the accessory (50) on the valve, and then when the section (53) is shifted into the centre opening of the keyhole shaped opening the top section (54) being larger than this centre opening rests on the top surface of the inner part (51). In this manner, when the inner parts (51) is translocated upwards it drags the spring guide (10) and thus the spindle (5) upwards too, thus removing the valve cone (3) from valve seat (2) forming free access through the valve from inlet to outlet.

Fig. 4A shows the knob (12) is being removed thus freeing the end part of the spring guide (10), and subsequently the flushing accessory (50) is positioned such that the inner part (51) connects to the end part of the spring guide (10). Since the spindle (5) and spring guide (10) is prevented from rotation so is the inner part (51) and by rotation of the outer part (52) the spindle (5) and the inner part (51) will be moved axially, and the spindle (5) therefor is force d in the upper and open position as seen in Fig. 4B. Due to the windings all restoring forces will have no effect and the spindle (5) and thereby valve cone (3) will remain in this open position until once again set free for normal operation.

The present invention however is not limited to the above described embodiment to change the setting. In another embodiment the setting is done without removing the knob (12) but where the knob (12) in its standard position as illustrated in Fig. 1 is rotated.

Alternative embodiments of the above described example includes that the valve knob (12) are not removed and turned around as seen in fig. 2, but may be turned directly. In this embodiment the knob (12) and setting (8) are blocked from relative rotation e.g. by a forming a bump at the one of the knob (12) or setting (8) fitting into a recess, or deepening, of the other. When the bump is positioned within the recess any relative rotation is prevented, and when rotating the knob (12) the setting (8) are rotated too thus changing the setting in the same manner as described at the previous embodiment above, just as unlocking, unblocking and subsequently blocking and locking.

In this embodiment, when the valve are to be shut-off for flows by pushing down the knob (12) in the manner as describe above, the bump then would be pushed out of the recess thus freeing the knob (12) and setting (8) to relative rotation.

In another embodiment the shut-off function and flushing function both is related to the shut-off function as described above where the valve is shut-off by rotation of the knob (12) relative to the setting (8) until it guided by windings has moved to a lower position where the valve cone (3) fully mates with the valve seat (2) to shut off for all flows. In this embodiment the flushing function would simply be by rotation of the knob (12) to an upper position.

Another important aspect of the present invention is to be seen at e.g. Fig. 1, but also the other figures. The valve is seen to comprising a valve part (60) formed within the valve housing (1), and a regulation part (61) formed of e.g. the setting housing (7), setting (8) and knob (12) excluding the spindle (5).

The valve part (60) comprise parts getting in contact with the media of the system such as the fluid flowing from the inlet to the outlet, this being in contact to one side of the membrane (4) through an first pressure opening (62), and the media relevant for the pressure equalization being in contact to the second side of the membrane (4) through an second pressure opening (63).

The valve part (60) thus needs to be formed of materials sustainable to the conditions of the fluids and the pressures, and is therefore typically formed of metal.

The regulation part (61) is attached to the valve part (60) thus as to a tap extension (64) to the valve housing (1), but its internal is sealed from it, such as by an O-ring (65) formed within the tap extension (64). Hereby is achieved that the fluids does not get into contact with the regulation part (61) or its internal. This makes it possible to form some or each of the parts of the regulation part (61) of cheaper materials than the valve part (60) like plastics though these would not be suitable as valve part (60) materials.

The spindle (5) is positioned such that it has a part positioned within the setting housing (7) and setting (8) of the regulation part (61), and a part positioned within valve housing (1) of the valve part (60) where it is connected to the valve cone (3) as also described above, and thus preferably is made of a material sustainable to the fluids too.

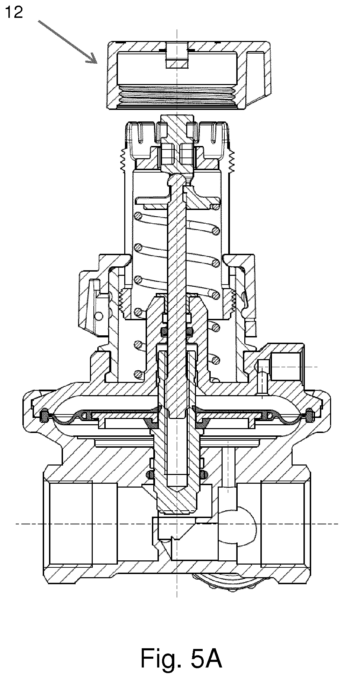

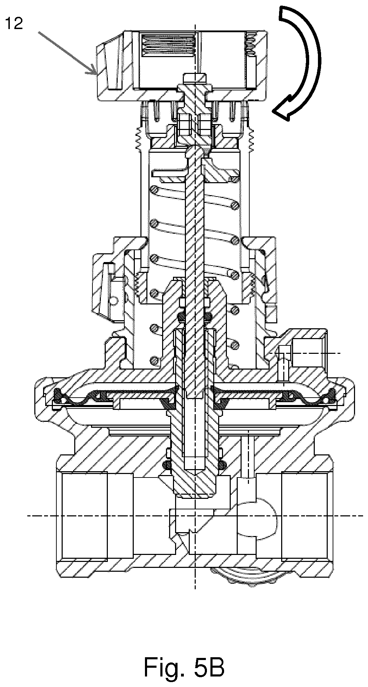

Figs. 5A and 5B illustrates an alternative use of removing the knob (12) and turning it around where it is used for the flushing function rather than setting as in Fig. 2, but otherwise it operates in the same manner and in the same manner as the flushing described previously. Setting then will be done by rotating the knob (12) in its standard position as seen in Fig. 1.

## Claims

1. A valve comprising a valve part (60) comprising;
- a valve housing (1) with a flow communication from a fluid inlet to a flow outlet and a valve seat (2) positioned within said flow communication, a valve cone (3) adapted to change position to change the valve opening defined as the opening between the valve seat (2) and valve cone (3), a membrane (4) adapted to deflect under the influence of a differential pressure across said membrane (4) and means (62, 63) to communicate pressures to the opposing sides of the membrane (4),
- a regulation part (61) comprising a biasing member (6), a setting (8) and setting housing (7), said regulation part (61) attached to said valve part (60)
- a spindle (5) having a part within the regulation part (61) and a part within the valve part (60) and connected to said valve cone (3),
wherein the valve part (60) and the regulation part (61) is sealed from each other,
**characterized in that** the setting (8) is partly positioned within the setting housing (7) and where the setting housing (7) and the setting (8) are interconnected such that the setting (8) may be translocated within the setting housing (7) thus translocating the spindle (5) within the valve cone (3) changing the pressure setting of the valve, and **in that** both the setting housing (7) and the setting (8) are hollow bodies, wherein the valve cone (3) comprises an internal winded bore matching windings at the end of the spindle (5) such that a rotation of the spindle (5) changes its position within the valve cone (3) this changing the tension of the biasing member (6).

2. Valve according to claim 1, wherein the setting housing (7) and setting (8) are interconnected by windings to guide a translocation of said setting (8) within said setting housing (7) by relative rotation.

3. Valve according to claim 2, wherein a blocking mechanism (9) is positioned to prevent rotation of the setting (8) relative to setting housing (7) in a locking position and enabling rotation in an unlocking position.

4. Valve according to any of the claim 2 to 3, wherein a spring guide (10) is connected to the setting (8) and defines the uppermost position of the biasing member (6) in the same manner as it has a bottom position (13) defining its lowermost position, the distance between these thus defining the tension of the biasing member (6) and thus giving to the membrane (4) where the spring guide (10) is connected to a setting snap (11) in a manner where they are inhibited from relative rotation and where the spring guide (10) is prevented from rotation within the setting (8) and where the spindle is prevented from rotation relative to the spring guide (10).

5. Valve according to one of claim 4, wherein the setting is done by rotating a knob (12) connected to the spring guide (10) and / or setting (8) in a manner where a rotation of the knob (12) induces a rotation of setting (8) and spring guide (10) and thus the spindle (5) being fixed to the spring guide (10) and thus induces a translocation of the spindle (5) within valve cone (3).

6. Valve according to any preceding claim, wherein the valve further comprises a shut off function where the valve cone (3) is maintained in contact with the valve seat (2) to shut off any fluid communication from the inlet to the outlet.

7. Valve according to claim 6, where the knob (12) is equipped with internal windings (15) adapted to match external windings (16) at the setting (8) where the windings (15, 16) for shut off function is connected by pushing down knob (12) where at least one limiter bump is be formed at the setting (8) and/or knob (2) such that a certain force is needed to push the knob (12) over the limiter bump(s) to the shut off mode.

8. Valve according to claim 1 and any of claims 4-6, wherein a flushing function is operated by translocating the spindle to an upper position without changing its position within the valve cone (3).

9. Valve according to claim 8, wherein a flushing accessory (50) attached to the valve for the flushing function, said flushing accessory (50) comprising an inner part (51) adapted to fit within an outer part (52) and the two parts being interconnected by windings, where the inner part (51) further comprises means to connect to a section (53) of the spring guide (10) in a manner where the two in inhibited in relative rotation to each other such as by their shape, such as the section (53) having two flat opposing sides and the inner part (51) having an centre opening matching this shape if the section (53), such that when the inner parts (51) is translocated upwards it drags the setting snap (11) and thus the spindle (5) upwards too, thus removing the valve cone (3) from valve seat (2) forming free access through the valve from inlet to outlet.

## Patentansprüche

1. Ventil, das ein Ventilteil (60) umfasst, umfassend:
- ein Ventilgehäuse (1) mit einer Strömungsverbindung von einem Fluideinlass zu einem Fluidauslass und einem Ventilsitz (2), der innerhalb der Strömungsverbindung positioniert ist, einem Ventilkegel (3), der ausgelegt ist, die Position zu ändern, um die Ventilöffnung zu ändern, die als die Öffnung zwischen dem Ventilsitz (2) und dem Ventilkegel (3) definiert ist, einer Membran (4), die ausgelegt ist, unter der Einwirkung eines Differenzdrucks quer über die Membran (4) auszulenken, und Mitteln (62, 63) zum Übertragen von Drücken zu den entgegengesetzten Seiten der Membran (4),
- ein Regelungsteil (61), welches ein Vorspannelement (6), ein Einstellungselement (8) und ein Einstellungselementgehäuse (7) umfasst, wobei das Regelungsteil (61) an dem Ventilteil (60) angebracht ist
- eine Spindel (5) mit einem Teil innerhalb des Regelungsteils (61) und einem Teil innerhalb des Ventilteils (60) und verbunden mit dem Ventilkegel (3), wobei das Ventilteil (60) und das Regelungsteil (61) voneinander abgekapselt sind,
**dadurch gekennzeichnet, dass** das Einstellungselement (8) teilweise innerhalb des Einstellungselementgehäuses (7) positioniert ist und wobei das Einstellungselementgehäuse (7) und das Einstellungselement (8) derart miteinander verbunden sind, dass das Einstellungselement (8) innerhalb des Einstellungselementgehäuses (7) verlagert werden kann, wodurch die Spindel (5) innerhalb des Ventilkegels (3) verlagert wird, was die Druckeinstellung des Ventils ändert, und dass sowohl das Einstellungselementgehäuse (7) als auch das Einstellungselement (8) Hohlkörper sind, wobei der Ventilkegel (3) eine innere gewundene Bohrung umfasst, die mit Windungen an dem Ende der Spindel (5) zusammenpasst, so dass eine Drehung der Spindel (5) deren Position innerhalb des Ventilkegels (3) ändert, was die Spannung des Vorspannelements (6) ändert.

2. Ventil nach Anspruch 1, wobei das Einstellungselementgehäuse (7) und das Einstellungselement (8) durch Windungen miteinander verbunden sind, um eine Verlagerung des Einstellungselements (8) innerhalb des Einstellungselementgehäuses (7) durch eine Relativdrehung zu führen.

3. Ventil nach Anspruch 2, wobei ein Blockiermechanismus (9) so positioniert ist, dass er eine Drehung des Einstellungselements (8) in Relation zu dem Einstellungselementgehäuse (7) in einer Verriegelungsposition verhindert und eine Drehung in einer Entriegelungsposition ermöglicht.

4. Ventil nach einem der Ansprüche 2 bis 3, wobei eine Federführung (10) mit dem Einstellungselement (8) verbunden ist und die oberste Position des Vorspannelements (6) auf die gleiche Weise definiert, wie sie eine Bodenposition (13) aufweist, die ihre unterste Position definiert, wobei der Abstand zwischen diesen somit die Spannung des Vorspannelements (6) definiert und somit an die Membran (4) gibt, wobei die Federführung (10) mit einer Einstellungselementraste (11) auf eine Weise verbunden ist, dass sie an einer Relativdrehung gehindert werden, und wobei eine Drehung der Federführung (10) innerhalb des Einstellungselements (8) verhindert wird, und wobei eine Drehung der Spindel in Relation zu der Federführung (10) verhindert wird.

5. Ventil nach einem von Anspruch 4, wobei die Einstellung durch Drehung eines Knopfes (12) erfolgt, der mit der Federführung (10) und/oder dem Einstellungselement (8) auf eine Weise verbunden ist, dass eine Drehung des Knopfes (12) eine Drehung des Einstellungselements (8) und der Federführung (10) und somit der an der Federführung (10) fixierten Spindel (5) bewirkt und somit eine Verlagerung der Spindel (5) innerhalb des Ventilkegels (3) bewirkt.

6. Ventil nach einem der vorhergehenden Ansprüche, wobei das Ventil ferner eine Absperrfunktion umfasst, bei der der Ventilkegel (3) in Kontakt mit dem Ventilsitz (2) gehalten wird, um jegliche Strömungsverbindung von dem Einlass zu dem Auslass abzusperren.

7. Ventil nach Anspruch 6, wobei der Knopf (12) mit Innenwindungen (15) versehen ist, die ausgelegt sind, mit Außenwindungen (16) an dem Einstellungselement (8) zusammenzupassen, wobei die Windungen (15, 16) für die Absperrfunktion durch Herunterdrücken des Knopfes (12) verbunden werden, wobei mindestens ein Begrenzungshöcker an dem Einstellungselement (8) und/oder dem Knopf (2) ausgebildet ist, so dass eine gewisse Kraft erforderlich ist, um den Knopf (12) über den/die Begrenzungshöcker in den Absperrmodus zu drücken.

8. Ventil nach Anspruch 1 und einem der Ansprüche 4-6, wobei eine Spülfunktion betätigt wird, indem die Spindel zu einer oberen Position verlagert wird, ohne ihre Position innerhalb des Ventilkegels (3) zu ändern.

9. Ventil nach Anspruch 8, wobei ein Spülzubehör (50) an dem Ventil für die Spülfunktion angebracht ist, wobei das Spülzubehör (50) einen inneren Teil (51) umfasst, der ausgelegt ist, in einen äußeren Teil (52) zu passen, und wobei die zwei Teile durch Windungen miteinander verbunden sind, wobei der innere Teil (51) ferner Mittel zum Verbinden mit einem Abschnitt (53) der Federführung (10) auf eine Weise umfasst, dass die zwei an einer Relativdrehung zueinander etwa aufgrund ihrer Form gehindert werden, etwa indem der Abschnitt (53) zwei flache entgegengesetzte Seiten aufweist und der innere Teil (51) eine mittlere Öffnung aufweist, die mit dieser Form des Abschnitts (53) zusammenpasst, so dass, wenn die inneren Teile (51) nach oben verlagert wird, es die Einstellungselementraste (11) und somit die Spindel (5) ebenfalls nach oben zieht, wodurch der Ventilkegel (3) aus dem Ventilsitz (2) entfernt wird, was einen freien Zugang durch das Ventil von dem Einlass zu dem Auslass ausbildet.

## Revendications

1. Soupape comprenant une partie de soupape (60) comprenant :
- un corps de soupape (1) avec une communication fluidique d'une entrée de fluide à une sortie d'écoulement et un siège de soupape (2) positionné dans ladite communication fluidique, un cône de soupape (3) conçu pour changer de position afin de modifier l'ouverture de la soupape définie comme l'ouverture entre le siège de soupape (2) et le cône de soupape (3), une membrane (4) conçue pour dévier sous l'influence d'une pression différentielle à travers ladite membrane (4) et des moyens (62, 63) pour communiquer des pressions aux côtés opposés de la membrane (4),
- une partie de régulation (61) comprenant un élément de sollicitation (6), un dispositif de réglage (8) et un boîtier de dispositif de réglage (7), ladite partie de régulation (61) étant fixée à ladite partie de soupape (60),
- une tige (5) comportant une partie dans la partie de régulation (61) et une partie dans la partie de soupape (60) et reliée audit cône de soupape (3),
la partie de soupape (60) et la partie de régulation (61) étant étanches l'une par rapport à l'autre,
**caractérisée en ce que** le dispositif de réglage (8) est partiellement positionné à l'intérieur du boîtier de dispositif de réglage (7) et le boîtier de dispositif de réglage (7) et le dispositif de réglage (8) étant interconnectés de telle sorte que le dispositif de réglage (8) peut être déplacé à l'intérieur du boîtier de dispositif de réglage (7), déplaçant ainsi la tige (5) à l'intérieur du cône de soupape (3), modifiant le réglage de pression de la soupape, et **en ce que** le boîtier de dispositif de réglage (7) et le dispositif de réglage (8) sont tous deux des corps creux, le cône de soupape (3) comprenant un alésage interne enroulé qui s'adapte aux enroulements à l'extrémité de la tige (5) de telle sorte qu'une rotation de la tige (5) modifie sa position à l'intérieur du cône de soupape (3), ce qui modifie la tension de l'élément de sollicitation (6).

2. Soupape selon la revendication 1, dans laquelle le boîtier de dispositif de réglage (7) et le dispositif de réglage (8) sont interconnectés par des enroulements pour guider un déplacement dudit dispositif de réglage (8) à l'intérieur dudit boîtier de dispositif de réglage (7) par rotation relative.

3. Soupape selon la revendication 2, dans laquelle un mécanisme de verrouillage (9) est positionné pour empêcher la rotation du dispositif de réglage (8) par rapport au boîtier de dispositif de réglage (7) dans une position de verrouillage et pour permettre la rotation dans une position de déverrouillage.

4. Soupape selon l'une quelconque des revendications 2 et 3, dans laquelle un guide de ressort (10) est relié au dispositif de réglage (8) et définit la position la plus haute de l'élément de sollicitation (6) de la même manière qu'il a une position basse (13) définissant sa position la plus basse, la distance entre celles-ci définissant ainsi la tension de l'élément de sollicitation (6) et conférant ainsi cette tension à la membrane (4) où le guide de ressort (10) est relié à un cliquet de dispositif de réglage (11) d'une manière qui les empêche de tourner l'un par rapport à l'autre et où le guide de ressort (10) est empêché de tourner dans le dispositif de réglage (8) et où la tige est empêchée de tourner par rapport au guide de ressort (10).

5. Soupape selon la revendication 4, dans laquelle le réglage est effectué en tournant un bouton (12) connecté au guide de ressort (10) et/ou au dispositif de réglage (8) d'une manière telle qu'une rotation du bouton (12) induit une rotation du dispositif de réglage (8) et du guide de ressort (10) et la tige (5) étant ainsi fixée au guide de ressort (10) et induit ainsi un déplacement de la tige (5) dans le cône de soupape (3).

6. Soupape selon l'une quelconque des revendications précédentes, la soupape comprenant en outre une fonction de fermeture où le cône de soupape (3) est maintenu en contact avec le siège de soupape (2) pour fermer toute communication fluidique de l'entrée à la sortie.

7. Soupape selon la revendication 6, où le bouton (12) est équipé d'enroulements internes (15) conçus pour correspondre aux enroulements externes (16) au niveau du dispositif de réglage (8) où les enroulements (15, 16) pour la fonction de fermeture sont connectés en poussant le bouton (12) vers le bas où au moins une bosse de limiteur est formée au niveau du dispositif de réglage (8) et/ou du bouton (2) de sorte qu'une certaine force est nécessaire pour pousser le bouton (12) sur la ou les bosse(s) de limiteur vers le mode de fermeture.

8. Soupape selon la revendication 1 et l'une quelconque des revendications 4 à 6, dans laquelle une fonction de rinçage est actionnée en déplaçant la tige vers une position supérieure sans modifier sa position dans le cône de soupape (3).

9. Soupape selon la revendication 8, dans laquelle un accessoire de rinçage (50) est fixé à la soupape pour la fonction de rinçage, ledit accessoire de rinçage (50) comprenant une partie intérieure (51) conçue pour s'adapter à l'intérieur d'une partie extérieure (52) et les deux parties étant interconnectées par des enroulements, où la partie intérieure (51) comprend en outre un moyen de connexion à une section (53) du guide de ressort (10) d'une manière où les deux sont empêchées de tourner l'une par rapport à l'autre, notamment par leur forme, par exemple la section (53) ayant deux côtés plats opposés et la partie intérieure (51) ayant une ouverture centrale correspondant à cette forme de la section (53), de sorte que lorsque la partie intérieure (51) est déplacée vers le haut, elle tire le cliquet de dispositif de réglage (11) et donc la tige (5) vers le haut également, ce qui retire le cône de soupape (3) du siège de soupape (2) formant un accès libre à travers la soupape de l'entrée à la sortie.
